# EUROPEAN PATENT APPLICATION

(11) **EP 2 884 434 A1**
(43) Date of publication of application: **17.06.2015**
(21) Application number: 13196364.7
(22) Date of filing: 10.12.2013
(51) Int. Cl.: G06N 99/00, G10L 15/08

(54) **Method and device for automatic feedback generation**

(71) Applicant: Televic Education NV, 8510 Kortrijk (Marke) (BE)
(72) Inventor: Stubbe, Brecht, 9840 De Pinte (BE); Lagatie, Ruben, 8980 Geluveld (BE)
(74) Representative: Van Bladel, Marc

(57) **Abstract**

The present invention relates to a computer implemented method for creating a statistical classification model for automatic feedback generation starting from a set of features describing possible errors and a set of raw data units, each raw data unit comprising at least an answer, correction and feedback. The method comprises:
a) transforming raw data units to instances composed of one or more differences obtained by comparing the answer to the correction, so assigning a value to features of said set of features,
b) deriving a set of classes from said feedback of the raw data units,
c) reducing the number of classes in the set based on similarities between classes,
d) labelling each instance with one of the classes of the reduced set, and
e) building the statistical classification model for automatic feedback generation by means of a machine learning classifier using the labelled instances as training data.

## Description

### Field of the invention

The present invention is related to the field of artificial intelligence systems for providing automatic error feedback to learners of e.g. languages.

### Background of the invention

Feedback is a crucial element in the learning process of a student. Providing the student with adequate feedback regarding the quality of his/her utterance, covering both grammaticality and communicative appropriateness is a main requirement of any stimulating computer assisted language learning (CALL) environment. Moreover, the creative use of language in communicatively relevant settings should be encouraged. Either one of these requirements alone can be fulfilled easily. The combination of both, however, e.g. when evaluating the answer of a student in a so called open question, is obviously very difficult. The reason is that the possible mistakes a student can make in such a situation are virtually endless. Clearly, building a system that allows for free text input and, at the same time, provides students with detailed feedback on their language errors is notoriously difficult.

The ultimate goal of any CALL system is to model in a robust way the cognitive behaviour of humans in a particular social role, for example that of a language teacher. To achieve this, significant aspects of human cognitive abilities must be replicated in a machine. In doing so, one is dealing with so called intelligent CALL systems. Such systems use artificial intelligence (Al) and natural language processing (NLP) techniques to introduce the intelligence needed to mimic human teachers. One way to obtain intelligence is by using parsing, i.e. a technique that enables a computer to encode complex grammatical knowledge such as humans use to assemble sentences, recognize errors and make corrections.

State-of-the art solutions can be categorized in two types: parser-based CALL or statistical CALL.

In parser-based CALL parsers are used to analyse the answer of the student. Traditional parsers are unable to deal with erroneous input, so they need adaptation to be more robust. Moreover, in order to provide feedback, information about the errors has to be stored and afterwards used to construct an appropriate feedback message. This is sometimes called sensitive parsing. There are a few well-known limitations of parsers:
- parsers are not foolproof : they will fail to detect some errors and reject some sentences that are perfectly grammatical,
- parsers rarely go beyond syntax : they are mostly unable to detect semantic or pragmatic errors,
- sensitive parsers are very expensive : a few methods have been employed such as error rules and constraint relaxation, but both require the creation of detailed grammar rules or (weighted) constraints for erroneous constructions and often change the internal workings of the parser, introducing procedural methods in an inherently declarative algorithm,
- parsers are language and context dependent : the vocabulary and all grammar rules, error rules and constraints so carefully designed can only be used for a specific language and domain,
- sensitive parsing is computationally complex : due to the inherent ambiguity of a language and the large number of ways an error can be made, most sensitive parsing techniques have to employ techniques to avoid computational explosion, thereby lowering overall precision and recall.

Despite their complexity and cost, sensitive parsers are still unable to parse arbitrary ungrammatical input. More recently, research interest has therefore shifted towards statistical CALL techniques. Such methods simply require data, preferably annotated, and learn language patterns themselves. They are cheap to develop and often use an off-the-shelf classification algorithm to classify the input, i.e. (portions of) a student's answer. A number of different classifiers have been used, such as Bayesian classifiers, decision lists, decision trees, transformation-based learners, support vector machines and maximum entropy classifiers.

The classifier choice has no significant influence on efficiency. Of more importance is the choice of classes and features to be used. Classification can be done in two distinct ways. First, binary classification can be used to build a model that detects a specific type of error. The features can then be chosen so that they are relevant for the error type in question. In order to detect a variety of errors, a model has to be created for each error type. Second, it is also possible to use multiclass classification by assigning a class to each error type and build a single model that classifies phrases to one of the specified classes. Both methods have some drawbacks.

The main problem with binary classification is that detecting multiple errors requires multiple sequential classifications and this often leads to more complex errors not being correctly detected. It is also less memory efficient seeing as the same features are often present in multiple models, such as the part of speech (POS) tag of the word. Multiclass classification has a better performance, but including all features in a single model often results in features being relevant for some error types and irrelevant for others. This often leads to the classifier learning incorrect patterns.

The latter method has been applied in the paper *"*Automatic Error Detection in the Japanese learners' English spoken data" (Izumi et al., ACL '03 Proceedings 41st Annual Meeting on Association for Computational Linguistics, pp.145-148, July 2003). They describe a method for detecting grammatical and lexical errors made by Japanese learners of English. The feature set comprises a part of speech, a grammatical/lexical system and a corrected form. Special tags are provided for some errors that cannot be categorized into any word class.

Given sufficient clean data, statistical CALL systems are relatively easy and inexpensive to build, but their precision is too low to be of any use in a practical setting. They typically only detect half of the errors present in a text and about 30% of the errors they do detect, are actually not an error at all. Furthermore, systems that are able to identify errors make an incorrect classification in around 50% of the cases. The system proposed in the above-mentioned Izumi paper also suffers from this poor performance figures. The main cause of this subpar performance is the choice of features. Much attention and money has been spent to find better features.

An easy way to generate feedback is by presenting the student answers again to the user and highlighting where, and possibly which, letters (or words) are missing, redundant or wrong. This is an example of repetition feedback with highlighting. This approach was taken in the implementation of the Language Independent Sequence Comparison (LISC) application, which is, as the name suggests, language independent because it is only based on approximate string matching.

To be able to present meaningful feedback to students learning a language by practicing, one not only needs to state *what* is wrong, but also *why* it is wrong. For a grammatical mistake, this implies being able to present feedback which explains the appropriate grammar rule. This is sometimes called metalinguistic feedback. Metalinguistic information generally provides either some grammatical meta-language that refers to the nature of the error or a word definition in the case of lexical errors.

Presenting metalinguistic feedback in parser-based CALL is easy, one simply adds a feedback message to each error rule, which describes a mistake. A large number of rules can be defined that attach feedback messages to a set of operations. Clearly one cannot define rules for all possible errors. Even if it were feasible, the rules would be too complex and abstract to do this in a manual way, the operations are not directly linked to the grammar rules. A solution to deal with this may be found in the field of machine learning.

Hence, there is a need for an improved tool for assisting in creating a learning system capable of generating automatic feedback.

### Summary of the invention

It is an object of embodiments of the present invention to provide a computer-implemented method for creating a classification model for automatic feedback generation based on machine learning.

The above objective is accomplished by the solution according to the present invention.

In a first aspect the invention relates to a computer-implemented method for creating a statistical classification model for automatic feedback generation starting from a set of features describing possible errors and a set of raw data units, each raw data unit comprising at least an answer, correction and feedback. The method comprises the steps of :
a) transforming raw data units to instances composed of one or more differences obtained by comparing the answer to the correction, so assigning a value to features of said set of features,
b) deriving a set of classes from said feedback of said raw data units,
c) reducing the number of classes in said set based on similarities between classes,
d) labelling each instance with one of said classes of said reduced set, and
e) building said statistical classification model for automatic feedback generation by means of a machine learning classifier using said labelled instances as training data.

The proposed method indeed yields a classification model capable of automatically providing feedback. At the outset, a set of features describing possible errors is available, as well as an amount of raw data units comprising an answer, correction and a portion of feedback. By comparing answer and correction for each raw data unit one or more differences are determined which allow assigning a value to features of the feature set for the various raw data units. From the feedback in the raw data units a number of classes are derived. Next the number of classes is reduced based on similarities between classes. This reduction step is required because semantically identical but differently formulated feedback has a negative effect on performance and accuracy. The best accuracy is achieved when each error is uniquely identified by a single feedback message. In a labelling step the various instances are then assigned a class from said reduced set of classes. The initial feedback message assigned to the raw data unit is used to identify the correct feedback message. This step could range in complexity from a simple one-to-one assignment of feedback messages to classes, to a complex categorisation of errors, depending on the information contained in the resulting feedback message. Next a machine learning classifier uses the labelled instances as training data to construct the classification model for automatic feedback generation.

In a preferred embodiment the one or more differences correspond to operations required to transform the answer into the correction.

When transforming the raw data units to instances approximate string matching is preferably applied.

In an advantageous embodiment the machine learning classifier is a decision tree classifier. Preferably the decision tree classifier is a C4.5 classifier, adapted to support instances comprising multiple operations.

In a preferred embodiment the features are derived from linguistic knowledge. The linguistic knowledge is in one embodiment retrieved from a lemmatizer or a part-of-speech tagger.

In another embodiment the step of reducing the number of classes is based on similarities by Levenshtein distance or regular expressions.

In certain embodiments of the invention the features characterise audio properties or relate to mathematical calculations.

In an embodiment the step of reducing the number of classes is based on external information. The external information is advantageously derived from the misclassifications of previous training phases.

In another aspect the invention relates to a program, executable on a programmable device containing instructions, which when executed, perform the method as previously described.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.

Fig.1 represents a flow chart of an embodiment of the method according to the invention.

Fig.2 illustrates an example of a decision tree.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention discloses a computer-implemented method for learning a computer device to derive a classification model for generating a portion of feedback when it is fed with data input, typically provided by a student. For the derivation of the model one starts from a set of features describing possible errors and data units comprising an answer, a correction and some feedback, as detailed below.

In the approach according to the invention metalinguistic feedback is provided using machine learning. A system can so be constructed that it learns which feedback message is appropriate for a given error based on past experience. In essence, the system learns from and assists teachers who in the past provided feedback manually.

The proposed approach is applicable in a wide variety of learning environments. A main application field is that of (foreign) language learning. Below the case of language learning is taken as an example for describing the invention in technical detail. However, it is stressed that language learning is just one possible application field. One other application field is the teaching of mathematics. This and a few other alternatives are described with some more of detail at the end of this description.

The proposed approach exploits better, more detailed features to describe the errors extracted by combining approximate string matching and natural language processing techniques to compare student responses to known correct solutions. In many applications, such as translation exercises for instance, it is possible to provide the correct solutions. Alternatively, it is sometimes possible to automatically generate the solutions, for example using machine translation systems in the case of translation exercises or a mathematical reasoner for math exercises.

In the invention the aim is to learn a computer to recognize language errors and present feedback for them. So language mistakes are presented by showing the computer the faulty sentence and its correction. For each such mistake, the computer is told which feedback would be shown to the student. The system should then be able to provide that same feedback to similar mistakes. Suppose the computer is shown the following error

| | |
|---|---|
| **Error** | He work on the docks. |
| **Correction** | He works on the docks. |

and is told the feedback is as follows

| | |
|---|---|
| **Feedback** | You have made a subject-verb agreement error. |

The objective then is that if a student makes a similar mistake, like this one:

| | |
|---|---|
| **Error** | He live in Belgium. |
| **Correction** | He lives in Belgium. |

the computer recognizes this as the same mistake and is able to present the same feedback.

As mentioned above, state-of-the-art feedback generation algorithms analyse the input of the student in order to detect and provide feedback for a variety of language errors. All of these methods achieve this objective by comparing the sentence in question to a predefined language model, describing correct language use. For each structural disagreement between the input and the model, the most likely intended meaning is derived. Using the same algorithm, the changes required to transform the input to the correction are then presented as feedback.
A logical first step of any feedback generation algorithm is to find the closest correction. In many applications however, such as post-editing and word processors, there is no indication whether a sentence is correct or not, nor does it have the correction of such a faulty sentence at hand. As a result, there is no other alternative than to use a complex language model as comparison.

In learning environments, however, students often answer specific questions, such as translate or fill-in-the-blanks exercises. In this case, the teacher cannot predict all possible incorrect answers the students will give, but it is possible to provide the correct solutions to such a question. Consequently, as the solutions are available, it is possible to define more detailed features derived from the difference between the error and the correction.

This approach is different from the state-of-the-art in a significant way. First, the system does not need to parse the sentence to determine its correctness. It can simply compare the input to the solution. Second, detailed features can be deduced based on the transformations needed to convert the answer to the correction. Third, because these features are based on operations and because every error can be translated to such operations, the features are universal and able to describe every possible error. Finally, the operations can be described without any linguistic information, for instance by means of the string operation, resulting in a language independent solution.

The proposed approach, in contrast to any other feedback generation method, does not model the correct or incorrect patterns of a language. Nor does it try to use such a model to determine whether or not a given sentence is correct. Having the correction at hand allows modelling the operations needed to correct mistakes. In summary, the model applied in this invention does not describe language structures, but transformations. Each transformation can then be classified as (part of) an error and corresponding feedback message.

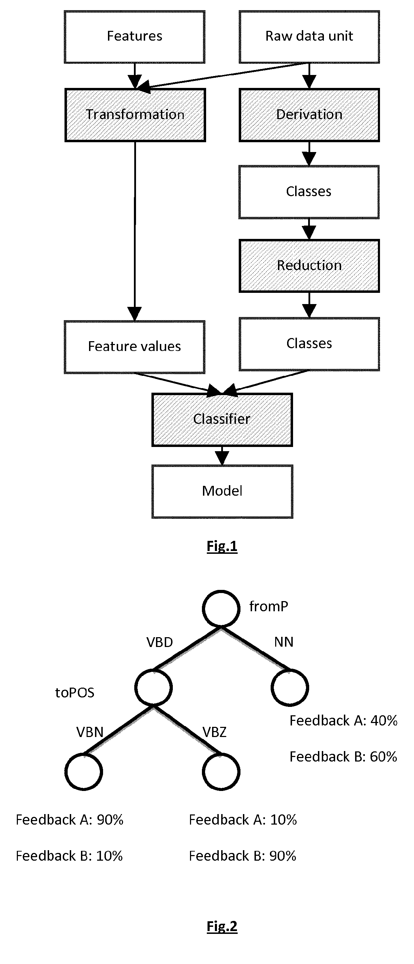

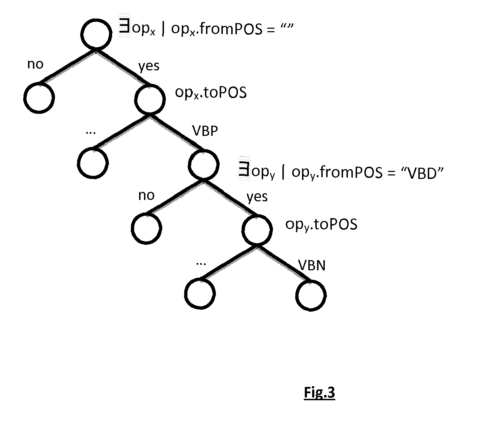

By way of example, the approach for building such a model will be explained starting from a collection of language errors. The same approach, however, can be taken to provide feedback in other application domains, such as maths, science, etc. Fig.1 presents a high-level block diagram of the proposed approach. The various blocks of the scheme will be detailed in the description below.

Any classification model is built from training data. In the case of supervised learning, whereby always information is required to train a model on, each training instance is annotated with its corresponding class. From this, the classifier can learn patterns that can identify instances as belonging to a specific class. It is this collection of patterns (often implemented as rules) that makes up the classification model. The patterns specify these relations by comparing specific features of an instance. Take for example a classification system that, given a picture of an animal, tries to identify its animal group (invertebrate, fish, amphibian, ...). Such a system would need to compare relevant features such as colour, shape, size etc...

The collection of training data is essentially a table with n rows, one for each instance, and *k+1* columns with a value for each of the k features and the corresponding class. This means that both the features and the classes have to be predefined. As mentioned above, the approach according to the invention tries to classify the differences between the incorrect and the correct sentence to an error or its explanation. An important part of this invention therefore involves the comparison of input and correction, and the subsequent transformation to features.

In the case of language errors, a possible comparison technique is approximate string matching (ASM). This technique calculates the similarity of two strings based on the edit distance, which is defined as the number of string operations needed to convert one string into the other. Depending on which operations are considered, different edit distances have been defined. The Hamming distance only allows substitution and thus only applies to strings of the same length. The longest common substring considers insertions and deletions. The Levenshtein distance considers the three basic string operations: substitution, insertion and deletion.
To clarify with an example: the Levenshtein distance between string ADF and AFE is two, because the sentence can be transformed by deleting D and adding E. Note however that one can also substitute D by F and F by E, resulting in the same distance value. So although the distance value is deterministic, the operations behind it are not.

The algorithm to calculate the Levenshtein distance between two strings uses dynamic programming by continually reducing the problem to calculating the distance between smaller substrings until the substrings are of length 1, rendering the calculation trivial: the distance between two characters is 0 if they are equal, else it is 1. The results of the sub calculations are stored in an n x m matrix, essentially comparing each of the n elements of the first string to the m elements of the second.

The Levenshtein distance is simply a number and can in essence be used as a feature in the classification model. It is however impossible to differentiate all possible language errors based solely on the number of operations they produce. Luckily, the same algorithm can be used to calculate the individual operations. This yields much more detailed features.

The matrix constructed by the dynamic programming method can afterwards be traversed back to front to find the actual operations. This algorithm is performed twice, once on the level of words and a second time on the level of letters. The first step calculates the words that need to be added, removed or substituted, then for each substitution one compares both words to find which letters need to be added, removed or substituted.

An operation can be represented as a tuple *(letter from, letter to).* In case of an addition, the *letter from* is empty and in case of a removal, the *letter to* is empty. So for both examples above one would have the following feature values:

| **Letter from** | **Letter to** | |
|---|---|---|
| | s | You have made a subject-verb agreement error. |

This set of features, although more detailed than the distance, is however still not enough. Assume the following error :

| | |
|---|---|
| **Error** | Those chair are very old. |
| **Correction** | Those chairs are very old. |

This very different error obviously results in the same feature values as above. Even if the relative position of the operation in the word were included, one would still have the same values (both are added at the end of the word). It is clearly advantageous to include information about the word.

A simple solution would be to include the *word from* and the *word to* as features (making the letter operations redundant). However, adding these features has a limited effect. Not only is there a vast amount of correct words *(word to)* in each language, the number of errors *(word from)* is even larger. Very detailed features can help the classifier, but chances are high that they will not be used often. They are only useful when a lot of values are present in the training set.

It is better to add a nominal feature that has less possible values. One possibility is to use the lemma of the word instead of the word itself. This way, all conjugations are mapped to the same lemma, effectively reducing the amount of possible values. There are however still many possible lemmas. Another yet more restrictive feature is to use the part-of-speech (POS) of the word in question. Traditionally, in English there are eight parts of speech: verb, noun, pronoun, adjective, adverb, preposition, conjunction and interjection.

To determine the POS of a word, a so-called *POS tagger* is needed. It assigns a tag to each word in the sentence. There are many more tags than POS because a tag often contains more information, like the verb tense, the noun plurality, etc. There are several possible techniques to tag a sentence, but every one of them uses classification and all are trained on an annotated corpus. Some common examples are n-gram taggers (i.e. generalized unigram taggers, which look at the individual word in the corpus and take into account *n-1* surrounding words, and store the most frequent associated tag), the Brill tagger (which uses a tagger, e.g. a unigram tagger or an n-gram tagger, for initialization, but afterwards learns a number of transformation rules that would improve the tagger), taggers using hidden Markov models (HMM) and the Viterbi algorithm.

The features can now be extended with these POS tags. It makes sense to include both the tag of the *word to* and the tag of the *word from.* Simple grammar errors like tense or plurality errors can then easily be detected. Misspellings might result in trying to tag a non-existent word, but these words are mapped to *noun,* so they pose no real problem. The precise values of the features are not really important, as long as the same features describe the same error.

A suitable set of features can be the following : {Letter from, Letter to, Position in word, Position in sentence, Word from, Word to, Lemma from, Lemma to, POS tag from, POS tag to}. Another useful feature is the relative index of the operation in the sentence and in the word. The list of features mentioned here is not exclusive. Other features can be added to improve accuracy.

Now that a feature set has been obtained, the next step is to convert the raw data units into a data set as training input for the classifier. In the case of language learning, the input and correction sentences are first POS tagged, then a word-level Levenshtein algorithm is used to find the word operations and finally the letter operations are extracted for each word substitution. In each subsequent step, a reference is kept to the corresponding word and its POS tag.

The Levenshtein traversal algorithm is adapted so that it takes the lemma and POS tag into consideration to solve possible ambiguities. Take for instance the comparison between *"They gave her flowers"* and *"They have given her flowers".* The transformation can be done in two ways, requiring the same number of letter operations. The algorithm can either replace "gave" by "have" and add "given", or add "have" and replace "gave" by "given". Using linguistic information such as the POS and the lemma, preference can be given to the second transformation.
The following example is considered :

| | |
|---|---|
| **Student answer** | They gave her flowers. |
| **Correct answer** | They have given her flowers. |
| **Feedback** | You have used the wrong verb tense. You used the past simple, but needed the past perfect. |

The resulting training data would then be

| **Word from** | **Word to** | **POS from** | **POS to** | **Lemma from** | **Lemma to** | **Class** |
|---|---|---|---|---|---|---|
| | have | | VBP | | have | You have ... |
| gave | given | VBD | VBN | give | give | You have ... |

wherein VBP, VBD and VBN denote Verb non-3^{rd} person singular present, Verb past tense and Verb past participle, respectively. Given enough such data, the classifier would learn that this feedback is to be given whenever a past verb is added and another past verb is change to a past participle. It might also need to learn that the lemma of the first verb should be 'have' and that the lemma of the second verb should remain the same.
Other features can be added if these rules are still not sufficient to differentiate all feedback messages. The position in the sentence might be added so that such feedback only applies when the first verb is in close proximity of the second. Moreover, as has already been mentioned above, one could also add the individual letter operations which are useful for detecting orthographic errors, like accents.

From the example above it is clear that there are often multiple training instances for a single error. When classifying an error this results in multiple class distributions. The most likely class can then be found by taking the product of the probabilities of each class. This method assumes, similar to a Naïve Bayes approach that the instances are independent of each other. But as is also the case for Naïve Bayes, such an assumption, even if incorrect, is often useful.

It is possible to introduce dependencies by repeating the feature set for each operation, as shown in the table below. This ensures there is only one instance for each error and takes operation co-occurrence and order into consideration. However, for language errors, the number of operations and their order is not very consistent; the same error can be produced in different ways and there might be multiple distinct errors in a student's response.

| **Word from 1** | **Word to 1** | **...** | **Word from 2** | **Word from 2** | **...** | **Class** |
|---|---|---|---|---|---|---|
| | have | | gave | given | | You have ... |

Another advantageous approach is by altering the classification algorithm to be able to classify instances composed of multiple operations. This approach will be illustrated using the C4.5 decision tree.

A decision tree classifier has a number of crucial advantages. First, it is able to ignore features that would decrease the classifier's performance. Second, the resulting model is easy to understand, even by humans. As a result it is able to explain why it makes a certain prediction. Third, the algorithm is relatively easy to implement, and more importantly, easy to adapt.

An example of a simple decision tree is shown in Fig.2. Each node in the tree represents a decision point, based on a feature. For each possible value of said feature, a subtree further subdivides the data. The algorithm therefore inherently considers feature dependencies, in contrast to a Naïve Bayes approach. At the leaves, the class distributions of the training data are stored.

The C4.5 algorithm trains its decision tree in two phases. First it constructs a tree that perfectly maps the training data. This results in an overfitting : the tree perfectly predicts the training data, but performs badly on new test data. To counter this, the algorithm then prunes this tree in order to remove too specific branches.

The C4.5 algorithm can be adapted to support sub instances by basing a decision on the feature of one of its operations. The selection of this operation has to be deterministic across instances. A simple selection criterion could for instance be to select the n^{th} operation ordered by its position in the sentence. This is identical to the approach described above where the features are repeated in the training instance. As mentioned before, this assumes the occurrence of language errors always results in the same number and order of operations.

In the case of language learning, a better approach would be to select an operation by one of its features. This would introduce another type of decision which selects an operation based on a feature value and store it in a register. Sub-nodes can then further base a decision on a feature value of the same operation. To illustrate, take the example with the error against the verb tense explained previously. The use of the wrong verb tense results in two word operations. The decision tree, or at least part of it, might look similar to the one in Fig.2.

In the previous sections the features have been described as well as how to construct them and possible ways of adapting the classification algorithm to deal with multiple operations. As mentioned before, each instance of the training data is annotated by a class. In this invention, this class corresponds to a feedback message for the particular error. This could be as simple as a one-to-one mapping, but more advanced techniques can be used as well.

Depending on the raw data, presumably collected from teachers providing feedback for specific errors, often the same error will be given a different feedback message. The reason is twofold. First, there might be multiple teachers and it is unlikely that two teachers will always give identical feedback for the same errors. Second, the feedback might be more specific and contain information about the context of the error.

One of the prerequisites of any classification algorithm is that there should be enough features to differentiate between classes. In this case however, there might be a different feedback message for the exact same set of operations. This negatively influences accuracies and should thus be avoided. In the present invention this problem can be solved by including additional features, such as the identity of the teacher. Feedback is also often individualised for the student, so advantageously student details, such as age, gender, proficiency, etc. can be included.

Training data have shown that different feedback was often given for the same error to the same user and there were no clear features that could be used to explain why. Therefore a preprocessing step is added that uses an approximate string matching algorithm to identify nearly identical feedback messages and discard duplicates. More complex techniques can be used as well, ranging from simple regular expressions to expert systems.

Consider for example these two feedback messages: "Pay attention to the verb conjugation!" and "You have conjugated the verb incorrectly". Both messages deal with the same error, but are expressed differently. To identify such similar feedback messages, one can for instance use string comparison techniques to discover that both strings contain "verb" and the second contains a similar word to "conjugation" (conjugated). Also regular expressions can be used that describe such similarities.

A more advanced approach is to iteratively train the classifier above and examine the incorrectly classified instances. From this a list can be obtained of feedback messages which the system often incorrectly classifies. This can be of help to identify potential class similarities.

Next a few other application domains of the invention are briefly highlighted. First, it has been shown how the system can be used for providing feedback for natural language errors, but it can be easily applied to providing feedback for programming languages or even mathematical calculations. Programming languages have much less ambiguity and adhere to fewer and less complex rules. The same is true for mathematical calculations, though the language is more abstract and sometimes requires numeric approximation. To illustrate with an example, take this factoring mistake: *πy²* + 4*y*² = 4*πy*², which obviously should be: *πy²* + 4*y²* = (4 + *π*)*y*²*.* The input could then be compared to the correction and feedback could be presented such as "The coefficients must be added, since the common element must be factored out from the sum." Similarly, considering only string comparison would be insufficient. Other advanced features are needed that take the whole formula into consideration.

A second application is that of providing feedback to questions that require specific domain knowledge, such as geography and history. Take for instance the question: "What is the capital of Belgium?". When the student answers "Paris", appropriate feedback would be "Paris is the capital of France, the capital of Belgium is Brussels". Simply providing this feedback based on the fact that there is a transformation of the word Paris to Brussels is insufficient, unless all exercises deal with identifying the capitals of the world. Otherwise, a feature can be added to the feature set that identifies the pedagogical tasks of the question. One could even include domain knowledge features similar to the POS tag or the function. In this case, a feature such as "capitalOf", indicating the country of which the element is the capital of, could be used to differentiate mistakes against a capital from other errors.

A final application is that of correcting recorded speech or even music, such as piano playing. The student's input can be compared to that of the teacher by fuzzy comparing audio waves, possibly ignoring pitch, speed and level differences. Features can then be extracted from this comparison. Take for example the piano playing student, playing an incorrect note while performing Beethoven's *Für Elise.* If this is a common mistake, appropriate feedback can be given using the same algorithm.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Computer implemented method for creating a statistical classification model for automatic feedback generation starting from a set of features describing possible errors and a set of raw data units, each raw data unit comprising at least an answer, correction and feedback, the method comprising the steps of :
a) transforming raw data units to instances composed of one or more differences obtained by comparing the answer to the correction, so assigning a value to features of said set of features,
b) deriving a set of classes from said feedback of said raw data units,
c) reducing the number of classes in said set based on similarities between classes,
d) labelling each instance with one of said classes of said reduced set, and
e) building said statistical classification model for automatic feedback generation by means of a machine learning classifier using said labelled instances as training data.

2. Computer implemented method for creating a statistical classification model as in claim 1, wherein said one or more differences correspond to operations required to transform said answer into said correction.

3. Computer implemented method for creating a statistical classification model as in claim 1 or 2, whereby in the step of transforming said raw data units to instances approximate string matching is applied.

4. Computer implemented method as in any of claims 1 to 3, wherein said machine learning classifier is a decision tree classifier.

5. Computer implemented method as in claim 4, wherein said decision tree classifier is a C4.5 classifier, adapted to support instances comprising multiple operations.

6. Computer implemented method as in any of the previous claims, whereby said features are derived from linguistic knowledge.

7. Computer implemented method as in claim 6, wherein said linguistic knowledge is retrieved from a lemmatizer or a part-of-speech tagger.

8. Computer implemented method as in any of the previous claims, whereby said step of reducing said number of classes is based on similarities by Levenshtein distance or regular expressions.

9. Computer implemented method as in any of the previous claims, wherein said features characterise audio properties or relate to mathematical calculations.

10. Computer implemented method as in any of the previous claims, whereby said step of reducing said number of classes is based on external information.

11. Computer implemented method as in claim 10, wherein said external information is derived from the misclassifications of previous training phases.

12. A program, executable on a programmable device containing instructions, which when executed, perform the method as in any of claims 1 to 11.
